# EUROPÄISCHE PATENTSCHRIFT

(11) **EP 4 487 053 B1**
(45) Veröffentlichungstag und Bekanntmachung des Hinweises auf die Patenterteilung: **19.11.2025**
(21) Anmeldenummer: 23700682.0
(22) Anmeldetag: 10.01.2023
(51) Int. Cl.: F17C 13/04

(54) **ABSPERRVENTIL SOWIE WASSERSTOFFTANKSYSTEM MIT ABSPERRVENTIL**
SHUT-OFF VALVE, AND HYDROGEN TANK SYSTEM COMPRISING A SHUT-OFF VALVE
SOUPAPE D'ARRÊT ET SYSTÈME DE RÉSERVOIR D'HYDROGÈNE COMPRENANT UNE SOUPAPE D'ARRÊT

(30) Priorität: 03.03.2022 DE 102022202170
(43) Veröffentlichungstag der Anmeldung: 08.01.2025
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE); SOUBARI, Joachim, 76275 Ettlingen (DE)
(86) Internationale Anmeldenummer: PCT/EP2023/050447
(87) Internationale Veröffentlichungsnummer: WO 2023/165747

(56) Entgegenhaltungen:
- WO-A1-2020/158728
- DE-A1- 102018 221 600
- DE-A1- 102018 221 602
- US-A1- 2014 239 207
- US-A1- 2015 184 805
- US-A1- 2018 038 507
- US-B2- 6 675 831

## Beschreibung

Die Erfindung betrifft ein Absperrventil für Wasserstofftanksysteme. Ferner betrifft die Erfindung ein Wasserstofftanksystem mit einem erfindungsgemäßen Absperrventil.

### Stand der Technik

Bei Magnetventilen mit großen Hüben, wie dies beispielsweise bei Absperrventilen für Wasserstofftanksysteme der Fall ist, kommen üblicherweise Magnetaktoren mit Tauchanker zum Einsatz. Denn bei diesen geht die Magnetkraft mit zunehmendem Abstand zwischen Anker und dessen feststehendem Anschlag weniger stark zurück als bei Flachankerkonstruktionen.

Aus der DE 10 2018 221 602 A1 geht beispielhaft eine Tankvorrichtung zur Speicherung von Wasserstoff mit einer elektromagnetisch betätigbaren Ventileinrichtung hervor, die ein mit einem Ventilsitz zusammenwirkendes bewegliches Ventilelement zum Öffnen und Schließen einer Auslassöffnung aufweist. Das Ventilelement ist in Richtung des Ventilsitzes von der Federkraft einer Feder beaufschlagt, so dass bei unbestromter Magnetspule die Ventileinrichtung geschlossen ist. In Offenstellung gibt das Ventilelement eine Auslassöffnung mit einem Durchmesser sowie einen hieran anschließenden Durchlasskanal frei. Das Ventilelement bildet zugleich einen Magnetanker aus, der nach dem Tauchankerprinzip arbeitet. Wird die Magnetspule bestromt, bildet sich ein die Spule umschließendes Magnetfeld aus, dessen Feldlinien sich über einen Außenpolkörper, einen Innenpolkörper und den Magnetanker erstrecken. Die Feldlinien verlaufen dabei über einen radialen und einen axialen Luftspalt zwischen dem Magnetanker und dem Außenpolkörper. Mit Hilfe der im axialen Luftspalt entstehenden Magnetkraft kann der Magnetanker bzw. das Ventilelement entgegen der Federkraft der Feder aus dem Dichtsitz gehoben werden, so dass das Magnetventil öffnet.

Die US 2014/239207 A1 offenbart ein Absperrvenil für Wasserstofftanksysteme, umfassend ein Hauptventil mit einem hubbeweglichen Hauptventilkolben, der einenends einen Steuerraum begrenzt, andernends mit einem Hauptventilsitz zusammenwirkt und in Richtung des Hauptventilsitzes von der Federkraft einer Feder beaufschlagt ist, sowie eine ringförmige Magnetspule zur Einwirkung auf einen als Tauchanker ausgeführten Endabschnitt des Hauptventilkolbens.

In der US 2018/038507 ist eine Ventilvorrichtung gezeigt, umfassend: ein Hauptventilelement, das den Raum eines Ventilelements eines Gehäuses in die erste und zweite Druckkammer unterteilt; ein Dichtungselement, das so konfiguriert ist, dass es die erste und zweite Druckkammer voneinander isoliert; einen ersten Pilotdurchgang, bei dem ein Ende mit einem primären Durchgang verbunden ist und wobei das andere Ende mit einer zweiten Druckkammer und einer erster Drossel verbunden ist.

Aus der DE 10 2018 221600 A1 ist eine Verfahren zum Betreiben einer Tankvorrichtung bekannt zur Speicherung von verdichteten Fluiden mit einem Tank, einer Ventilvorrichtung, einer Zuführleitung, einem in der Zuführleitung angeordnetem Durchflussregelungselement und einer Steuereinheit, wobei die Ventilvorrichtung eine Magneteinrichtung umfasst, mittels welcher Magneteinrichtung der Öffnungs- und Schließvorgang der Ventilvorrichtung steuerbar ist.

Die WO 2020/158728 A1 offenbart ein Magnetventil für Gas, welches mit einem Gehäuse versehen ist, das einen ersten Anschluss, einen zweiten Anschluss und eine Ventilöffnung aufweist, einen Hauptventilkörper, der in der Lage ist, sich zwischen einer geschlossenen und einer offenen Position zu bewegen, und der sich in Öffnungsrichtung mittels des Drucks des aus dem ersten Anschluss zugeführten Gases bewegt.

Die US 2015/184805 A1 zeigt eine Anordnung für ein Flüssigkeitsregelventil, einschließlich: eines Hauptventilkörpers mit einem ersten Strömungskanal, der an einem Einlass montiert ist und durch den ein Füllquellengas strömt, einen zweiten Strömungskanal, durch den ein zuführendes Quellgas strömt, und einen dritten Strömungskanal, mit dem der erste Strömungskanal und der zweite Strömungskanal verbunden sind.

Die US 6 675 831 B2 zeigt eine Hochdruckbehältervorrichtung, die folgendes umfasst: einen Hochdruckbehälter, in den Hochdruckgas eingeleitet wird; und einen Ventilmechanismus, der so an einem Gasauslass des Hochdruckbehaelters vorgesehen ist, dass er sich im Inneren des Behaelters befindet.

Bei einem Magnetventil mit Tauchanker, wie es beispielhaft in der DE 10 2018 221 602 A1 beschrieben wird, führt die Feldeinkopplung über den radialen Luftspalt zu einer Schwächung des Magnetfelds im axialen Luftspalt. Die Folge ist eine Verringerung der auf den Magnetanker in Öffnungsrichtung wirkenden Magnetkraft. Das heißt, dass eine größere Magnetspule erforderlich ist, wodurch der Energie- und der Bauraumbedarf steigen.

Die vorliegende Erfindung versucht hier Abhilfe zu schaffen, insbesondere den Einsatz einer kleineren Magnetspule zu ermöglichen.

Zur Lösung der Aufgabe wird das Absperrventil mit den Merkmalen des Anspruchs 1 vorgeschlagen. Vorteilhafte Weiterbildungen der Erfindung sind den Unteransprüchen zu entnehmen. Darüber hinaus wird ein Wasserstofftanksystem mit einem erfindungsgemäßen Absperrventil angegeben.

### Offenbarung der Erfindung

Das vorgeschlagene Absperrventil für Wasserstofftanksysteme umfasst
- ein Hauptventil mit einem hubbeweglichen Hauptventilkolben, der einenends einen Steuerraum begrenzt, andernends mit einem Hauptventilsitz zusammenwirkt und in Richtung des Hauptventilsitzes von der Federkraft einer Feder beaufschlagt ist,
- ein Steuerventil zur Steuerung der Hubbewegungen des Hauptventilkolbens, wobei das Steuerventil einen Steuerventilanker aufweist, der in einem axialen Abstand koaxial zum Hauptventilkolben angeordnet ist und von der Federkraft der Feder oder einer weiteren Feder in Richtung eines Steuerventilsitzes beaufschlagt ist, sowie
- eine ringförmige Magnetspule zur Betätigung des Steuerventils und zur Einwirkung auf einen als Tauchanker ausgeführten Endabschnitt des Hauptventilkolbens.

Die indirekte Steuerung des Hauptventils mit Hilfe des Steuerventils ermöglichen den Einsatz einer kleineren Magnetspule, da diese nur die zum Öffnen des Steuerventils benötigte Kraft zur Verfügung stellen muss. Das Öffnen des Steuerventils führt zu einem Druckabfall im Steuerraum, so dass die auf den Hauptventilkolben in Schließrichtung wirkenden pneumatischen Kräfte sinken. Dadurch, dass der steuerraumseitige Endabschnitt des Hauptventilkolbens zugleich als Tauchanker ausgeführt ist, wirkt auf den Hauptventilkolben zusätzlich eine Magnetkraft. Die Kombination aus pneumatischer Kraft und Magnetkraft führt dann zum Öffnen des Hauptventils.

Das Öffnen des Absperrventils erfordert somit eine geringere Magnetkraft, so dass eine kleinere Magnetspule eingesetzt werden kann. In der Folge können Energie und Bauraum eingespart werden.

Gemäß einer bevorzugten Ausführungsform der Erfindung ist der Steuerraum über eine Zulaufdrossel, kurz Z-Drossel, mit einem Gas aus einem Speichervolumen beaufschlagbar und bei geöffnetem Steuerventil über den Steuerventilsitz entlastbar. Der Steuerventilsitz oder eine dem Steuerventilsitz nachgeschaltete Bohrung wirkt dabei als Ablaufdrossel, kurz A-Drossel. Bei geöffnetem Steuerventil strömt das Gas aus dem Speichervolumen über die Z-Drossel in den Steuerraum und von dort über die A-Drossel in einen Abströmbereich. Pneumatisch befindet sich Steuerraum also zwischen dem Speichervolumen und dem Abströmbereich. Im Steuerraum stellt sich daher ein Druckniveau zwischen Speicherdruck und Abströmdruck ein. Nach dem Schließen des Steuerventils und dem damit einhergehenden Verschließen der A-Drossel kann über die Zulaufdrossel erneut Druck im Steuerraum aufgebaut werden. Sofern das Absperrventil in einem Wasserstofftanksystem zum Einsatz gelangt, handelt es sich bei dem Gas bevorzugt um Wasserstoff. Das heißt, dass der Steuerraum über die Zulaufdrossel mit Wasserstoff beaufschlagt wird, vorzugsweise aus einem Speichervolumen eines Druckgasbehälters des Wasserstofftanksystems, so dass der Steuerraum mit Speicherdruck beaufschlagt wird. Im Steuerraum herrscht dann Hochdruck, während absteuerseitig betriebspunktabhängig, beispielsweise im Fall einer Mengenentnahme aufgrund der Sitzdrosselung am Hauptventil, ein niedrigerer Druck herrscht. Die Druckdifferenz bewirkt eine pneumatische Kraft, die zusammen mit der Federkraft der mindestens einen Feder sicherstellt, dass das Absperrventil bei unbestromter Magnetspule geschlossen wird und geschlossen bleibt. Selbst bei Betriebspunkten ohne Mengenentnahme und dadurch fehlendem Druckabfall am Hauptventilsitz wird das Hauptventil durch die Federkraft sicher geschlossen bzw. geschlossen gehalten.

Als Zulaufdrossel kann ein Führungsspalt genutzt werden, der zwischen dem als Tauchanker ausgeführten Endabschnitt des Hauptventilkolbens und einem den Endabschnitt aufnehmenden gehäuseseitigen Führungsabschnitt verbleibt. Weitere Maßnahmen zur Ausbildung der Zulaufdrossel sind in diesem Fall nicht erforderlich. Alternativ oder ergänzend kann der als Tauchanker ausgeführte Endabschnitt des Hauptventilkolbens mindestens eine Längsnut und/oder Abflachung zur Ausbildung der Zulaufdrossel aufweisen. Auf diese Weise kann ein größerer und/oder definierter Drosselquerschnitt zur Verfügung gestellt werden. In einer weiteren vorteilhaften Ausgestaltung ist im Führungsbereich ein Dichtelement vorgesehen, das den Steuerraum pneumatisch vom Speicherdruck trennt. In diesem Fall ist die Zulaufdrossel über eine zusätzliche drosselnde Verbindung zwischen dem Speichervolumen und dem Steuerraum realisiert, beispielweise über eine gehäuse-, ventil- oder dichtungsseitige Drosselbohrung.

Der Steuerventilanker ist vorzugsweise als Flachanker ausgeführt. Zur Optimierung der Feldlinienführung wird ferner vorgeschlagen, dass der Flachanker in radialer Richtung umlaufend einen Abstand zu einem Gehäuse des Absperrventils einhält. Der Abstand bewirkt, dass bei Bestromung der Magnetspule sich ein Magnetfeld aufbaut, dessen Feldlinien überwiegend durch den axialen Arbeitsluftspalt geleitet werden, was eine hohe Krafteinwirkung auf den Steuerventilanker zur Folge hat.

Die mindestens eine Feder des Absperrventils ist vorzugsweise im Steuerraum aufgenommen, der somit zugleich als Federraum dient. Im Fall von nur einer Feder kann diese einerseits am Hauptventilkolben, andererseits am Steuerventilanker abgestützt sein. Das Vorsehen von nur einer Feder reduziert die Anzahl der Bauteile. Allerdings muss die Federkraft der Feder auf die benötigte Kraft zum Schließen des Hauptventils abgestimmt werden, so dass sie zum Schließen des Steuerventils ggf. überdimensioniert ist. Diese Kraft muss dann zum Öffnen des Steuerventils durch die Magnetspule bereitgestellt werden. Um die Magnetspule noch kleiner auslegen zu können, ist daher das Vorsehen einer zweiten Feder, die auf das Steuerventil abgestimmt und daher kleiner ist, von Vorteil. Zur Aufnahme der beiden Federn ist dann der Steuerraum bevorzugt durch eine Zwischenwand mit Durchströmöffnung unterteilt, so dass zwei über die Durchströmöffnung verbundene Federräume ausgebildet werden. Die Zwischenwand dient zudem der gehäuseseitigen Abstützung der beiden Federn.

Des Weiteren wird vorgeschlagen, dass der Hauptventilkolben einen Ringbund mit einer Anschlagfläche aufweist oder ausbildet, in der vorzugsweise mindestens ein radial verlaufender Strömungskanal ausgebildet ist. Der Ringbund bildet zusammen mit einer gehäuseseitigen Anschlagfläche einen Hubanschlag aus. In Anlage am Hubanschlag stellt der mindestens eine radial verlaufende Strömungskanal sicher, dass die Zulaufdrossel pneumatisch an das Speichervolumen angebunden bleibt. Der Ringbund kann beispielsweise durch eine lokale Aufdickung des Hauptventilkolbens ausgebildet werden. Alternativ kann der Hauptventilkolben ein separates ring- oder hülsenförmiges Teil aufweisen, das außenumfangseitig auf dem Hauptventilkolben angeordnet und mit diesem kraft-, form- und/oder stoffschlüssig verbunden ist.

In Weiterbildung der Erfindung wird vorgeschlagen, dass der Hauptventilkolben einen als Flachanker ausgeführten Abschnitt aufweist, in dem mindestens eine Durchströmöffnung und/oder ein radial verlaufender Strömungskanal ausgebildet ist bzw. sind. Der als Flachanker ausgeführte Abschnitt des Hauptventilkolbens weist aufgrund seines größeren Durchmessers eine größere magnetische Grenzfläche als der als Tauchanker ausgeführte Abschnitt auf, was eine höhere Krafteinwirkung auf den Hauptventilkolben zur Folge hat. Die Ausgestaltung des Hauptventilkolbens als Tauch- und Flachanker ermöglicht somit eine weitere Optimierung der Feldlinienführung, bei der die Feldlinien des Magnetkreises überwiegend durch axiale Arbeitsluftspalte geführt werden. Das Öffnen des Hauptventilkolbens wird dann durch die anliegenden pneumatischen Druckverhältnisse sowie durch die auf die beiden Ankerabschnitte wirkenden Magnetkräfte realisiert.

Ferner wird vorgeschlagen, dass die Magnetspule in einem Bereich, der mit dem als Flachanker ausgebildeten Abschnitt des Hauptventilkolbens zusammenwirkt, einen erhöhten magnetischen Widerstand aufweist. Durch den erhöhten magnetischen Widerstand werden die Feldlinien nochmals verstärkt durch den als Flachanker ausgeführten Abschnitt des Hauptventilkolbens geführt, was zu einer erhöhten Kraft am Flachanker führt. Im Extremfall kann dieser Bereich sogar in Sättigung gehen.

Der als Flachanker ausgeführte Abschnitt des Hauptventilkolbens kann zugleich eine Anschlagfläche ausbilden, die mit einer gehäuseseitigen Anschlagfläche einen Hubanschlag ausbildend zusammenwirkt. Der Flachanker ersetzt in diesem Fall einen Ringbund. Die mindestens eine im Flachanker ausgebildete Durchströmöffnung und/oder der mindestens eine im Flachanker ausgebildete radial verlaufende Strömungskanal stellt dann die pneumatische Anbindung der Zulaufdrossel an das Speichervolumen sicher.

Bevorzugt weist der Steuerventilanker mindestens eine Durchströmöffnung zur Entlastung des Steuerraums auf. Durch die mindestens eine Durchströmöffnung ist bei vollem Hub des Steuerventilankers sichergestellt, dass der Steuerraum über das geöffnete Steuerventil entlastbar ist. Die mindestens eine Durchströmöffnung kann beispielsweise als Schrägbohrung ausgeführt sein, über die der Steuerraum an den Steuerventilsitz angebunden bleibt.

Bevorzugter Anwendungsbereich eines erfindungsgemäßen Absperrventils sind Wasserstofftanksysteme, so dass ferner ein Wasserstofftanksystem vorgeschlagen wird, das mindestens einen Druckgasbehälter sowie ein erfindungsgemäßes Absperrventil zum Absperren des Druckgasbehälters umfasst. Das Wasserstofftanksystem kann insbesondere in einem Brennstoffzellenfahrzeug oder in einem Fahrzeug mit Wasserstoffverbrennung zum Einsatz gelangen.

Bevorzugte Ausführungsformen der Erfindung und ihre Vorteile werden nachfolgend anhand der beigefügten Zeichnungen näher erläutert. Diese zeigen:
Figur 1 a)-e) jeweils einen schematischen Längsschnitt durch ein erstes erfindungsgemäßes Absperrventil in unterschiedlichen Schaltstellungen,
Figur 2 a)-e) jeweils einen schematischen Längsschnitt durch ein zweites erfindungsgemäßes Absperrventil in unterschiedlichen Schaltstellungen,
Figur 3 a)-e) jeweils einen schematischen Längsschnitt durch ein drittes erfindungsgemäßes Absperrventil in unterschiedlichen Schaltstellungen und
Figur 4 a)-e) jeweils einen schematischen Längsschnitt durch ein viertes erfindungsgemäßes Absperrventil in unterschiedlichen Schaltstellungen.

### Ausführliche Beschreibung der Zeichnungen

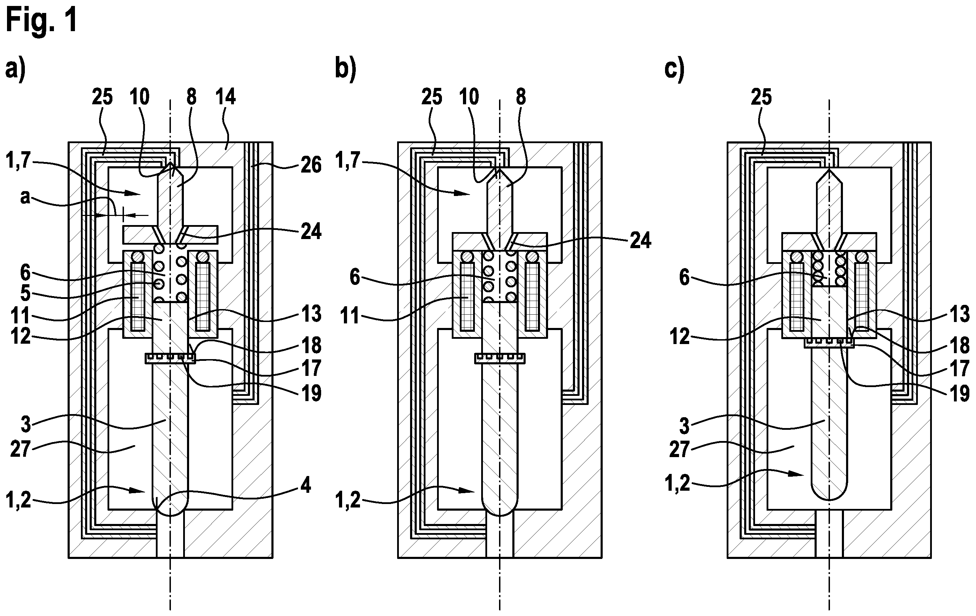

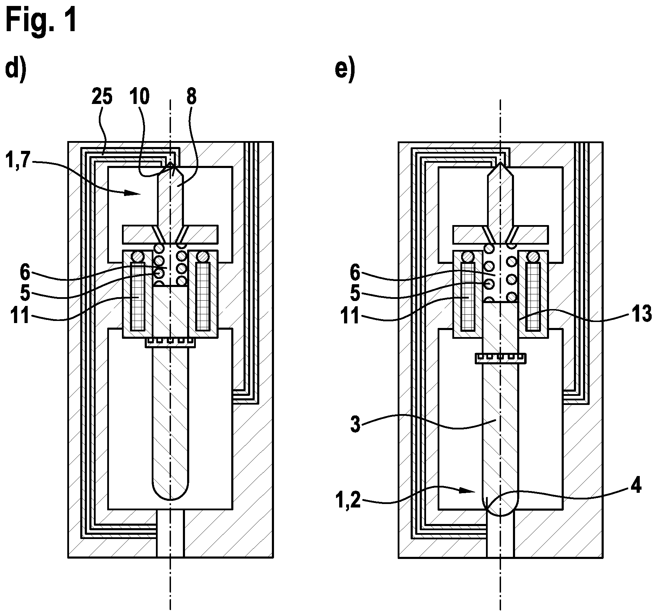

Das in den Figuren 1 a)-e) dargestellte Absperrventil 1 weist ein Hauptventil 2 mit einem hubbeweglichen Hauptventilkolben 3 auf, der mit einem Hauptventilsitz 4 zusammenwirkt und in Richtung des Hauptventilsitzes 4 von der Federkraft einer Feder 5 beaufschlagt ist. Der Hauptventilkolben 3 begrenzt an seinem dem Hauptventilsitz 4 abgewandten Ende einen Steuerraum 6, der über eine Zulaufdrossel 13 mit Gas aus einem Speichervolumen eines Druckgasbehälters (nicht dargestellt) verbunden ist. Das Gas gelangt aus dem Speichervolumen des Druckgasbehälters über eine Gasleitung 26 in einen Ventilraum 27 und aus diesem über die Zulaufdrossel 13 in den Steuerraum 6. Die Zulaufdrossel 13 wird vorliegend über das Führungsspiel eines gehäuseseitigen Führungsabschnitts zur Führung des Hauptventilkolbens 3 ausgebildet. Im Steuerraum 6 sowie im Ventilraum 27 herrscht somit Speicherdruck bzw. Hochdruck. Absteuerseitig, das heißt in einer Gasleitung 25 herrscht dagegen üblicherweise ein gegenüber dem Speicherdruck abgesenktes Druckniveau. Die anliegenden pneumatischen Druckverhältnisse sowie die Federkraft der Feder 5 drücken demnach den Hauptventilkolben 3 in den Hauptventilsitz 4, so dass das Hauptventil 2 geschlossen ist.

Zum Öffnen des Hauptventils 2 wird mit Hilfe einer ringförmigen Magnetspule 11 auf einen als Flachanker ausgeführten Steuerventilanker 8 eines Steuerventils 7 eingewirkt. Die Bestromung der Magnetspule 11 führt zur Ausbildung eines Magnetfelds, dessen Magnetkraft den Steuerventilanker 8 aus dem Steuerventilsitz 10 hebt, so dass das Steuerventil 7 öffnet (siehe Fig. 1b)). Dadurch, dass der Steuerventilanker 8 als Flachanker ausgeführt ist, wirkt auf diesen eine hohe Magnetkraft. Die Feldlinienführung des Magnetkreises ist ferner dadurch optimiert, dass der Flachanker einen radialen Abstand a zu einem Gehäuse 14 einhält, so dass die Feldlinien überwiegend durch den axialen Arbeitsluftspalt geführt werden.

Bei geöffnetem Steuerventil 7 strömt Gas aus dem Steuerraum 6 in die Gasleitung 25 ab, so dass der Druck im Steuerraum 6 abfällt. Im Steuerventilanker 8 ausgebildete Durchströmöffnungen 24 stellen dabei sicher, dass auch bei vollem Hub des Steuerventilankers 8 Gas aus dem Steuerraum 6 abströmen kann.

Der Druckabfall im Steuerraum 6 führt zu einer Entlastung des Hauptventilkolbens 3, während absteuerseitig bzw. in der Gasleitung 25 der Druck steigt. Da ein steuerraumseitiger Endabschnitt 12 des Hauptventilkolbens 3 als Tauchanker ausgeführt ist, wirkt auf diesen zugleich die Magnetkraft der Magnetspule 11, so dass schließlich eine Kombination aus pneumatischer und magnetischer Kraft zum Öffnen des Hauptventils 2 führt (siehe Fig. 1c)). Ein am Hauptventilkolben 3 ausgebildeter Ringbund 17 mit einer Anschlagfläche 18 begrenzt dabei den Öffnungshub des Hauptventilkolbens 3. Bei vollem Öffnungshub des Hauptventilkolbens 3 stellen im Ringbund 17 ausgebildete radial verlaufende Strömungskanäle 19 sicher, dass die Zulaufdrossel 13 an den Ventilraum 27 und damit an das Speichervolumen des Druckgasbehälters angebunden bleibt.

Zum Schließen des Hauptventils 2 wird die Bestromung der Magnetspule 11 beendet, so dass die Feder 5 den Steuerventilanker 8 in den Steuerventilsitz 10 zurückstellt und das Steuerventil 7 schließt (siehe Fig. 1d)). Da kein Gas mehr aus dem Steuerraum 6 abströmt, füllt sich dieser über die Zulaufdrossel 13 mit Gas, so dass der Druck im Steuerraum 6 wieder ansteigt. Die pneumatischen Druckverhältnisse führen zu einer pneumatischen Kraft, die zusammen mit der Federkraft der Feder 5 den Hauptventilkolben 3 in den Hauptventilsitz 4 zurückstellen, so dass das Hauptventil 2 schließt (siehe Fig. 1e)).

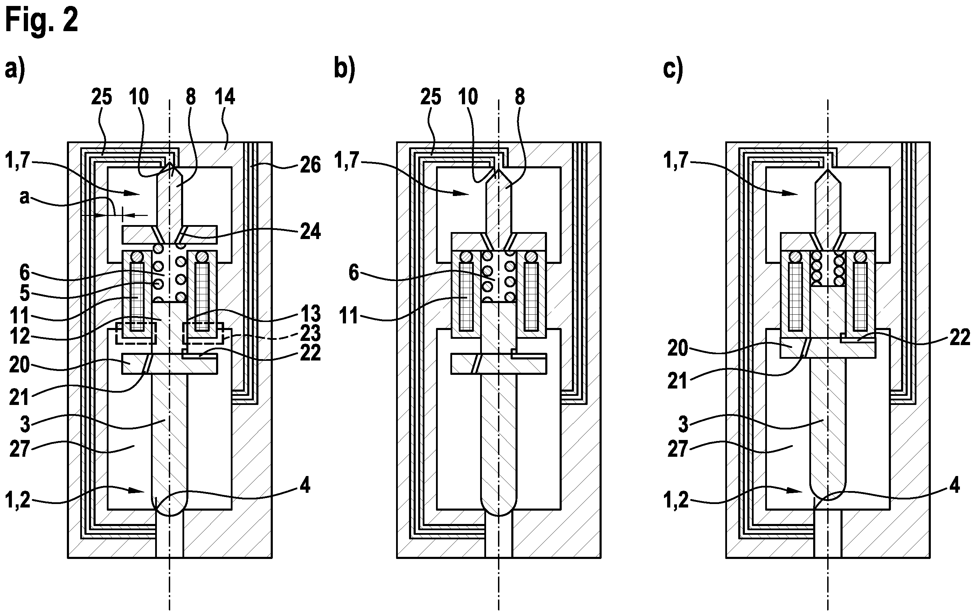

Den Figuren 2a)-e) ist eine weitere bevorzugte Ausführungsform eines erfindungsgemäßen Absperrventils 1 zu entnehmen. Dieses unterscheidet sich von dem der Figuren 1a)-e) insbesondere dadurch, dass der Hauptventilkolben 3 nicht nur einen als Tauchanker ausgeführten Endabschnitt 12, sondern ferner einen als Flachanker ausgeführten Abschnitt 20 aufweist. In einem mit dem Flachanker zusammenwirkenden Bereich 23 weist die Magnetspule 11 zudem einen erhöhten magnetischen Widerstand auf, so dass durch diese Maßnahmen die Feldlinien verstärkt durch den als Flachanker ausgeführten Abschnitt geführt werden. Dies hat zur Folge, dass auf den Hauptventilkolben 3 eine erhöhte Magnetkraft wirkt. Der als Flachanker ausgeführte Abschnitt 20 ersetzt zudem den Ringbund 17, so dass der Hubanschlag durch den Abschnitt 20 ausgebildet wird. Bei vollem Öffnungshub des Hauptventilkolbens 3 ist durch mindestens eine im Flachankerabschnitt ausgebildete Durchströmöffnung 21 und einen Strömungskanal 22 die pneumatische Anbindung der Zulaufdrossel 13 an den Ventilraum 27 sichergestellt.

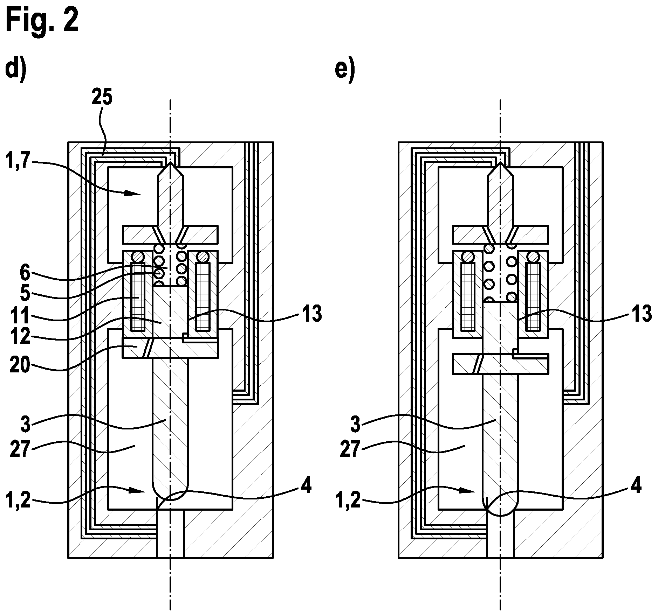

Die Funktionsweise des Absperrventils 1 der Figuren 2a)-e) entspricht der des Absperrventils 1 der Figuren 1a)-e). Die Figur 2a) zeigt das Absperrventil 1 bei unbestromter Magnetspule 11, das heißt im geschlossenen Zustand. Zum Öffnen wird die Magnetspule 11 bestromt, so dass sich ein Magnetfeld aufbaut, dessen Magnetkraft den Steuerventilanker 8 des Steuerventils 7 aus dem Steuerventilsitz 10 hebt (siehe Figur 2b)). Bei geöffnetem Steuerventil 7 strömt Gas aus dem Steuerraum 6 in die Gasleitung 25 ab, so dass der Druck im Steuerraum 6 abfällt. Der Druckabfall im Steuerraum 6 führt zu einer Entlastung des Hauptventilkolbens 3, so dass die in Öffnungsrichtung auf den Hauptventilkolben 3 wirkenden Kräfte überwiegen und das Hauptventil 2 öffnet (siehe Figur 2c)). Zum Schließen wird die Bestromung der Magnetspule 11 beendet, so dass Feder 5 den Steuerventilanker 8 in den Steuerventilsitz 10 zurückstellt (siehe Figur 2d)). Bei geschlossenem Steuerventil 7 steigt der Druck im Steuerraum 6 wieder an, da dieser über die Zulaufdrossel 13 mit dem Ventilraum 27 pneumatisch verbunden ist. In gleicher Weise steigt auch der Druck im Druckraum 6 an, so dass die in Schließrichtung auf den Hauptventilkolben 3 wirkenden Kräfte überwiegen und der Hauptventilkolben 3 in den Hauptventilsitz 4 zurückgestellt wird (siehe Figur 2e)).

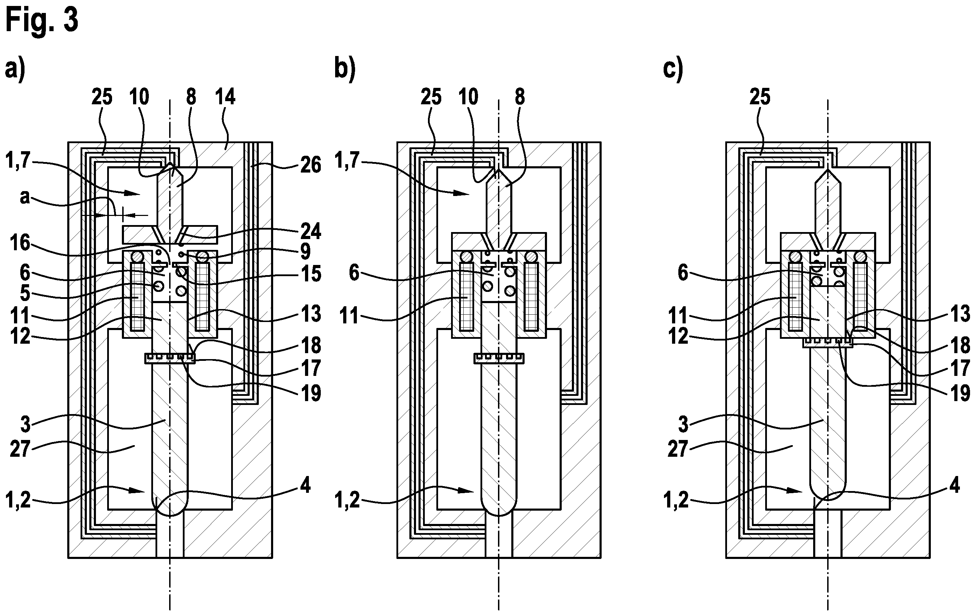

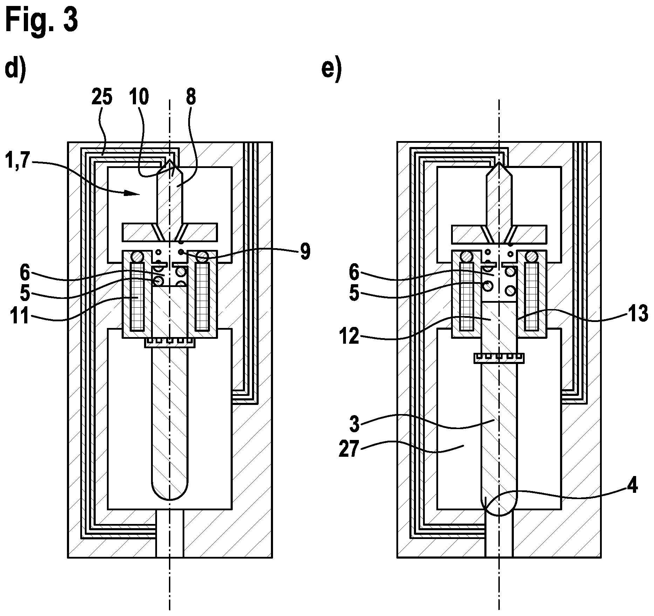

Das in den Figuren 3a)-e) dargestellte erfindungsgemäße Absperrventil 1 stellt eine Weiterbildung des Absperrventils 1 der Figuren 1a)-e) dar. Anstelle einer gemeinsamen Feder 5 sind im Steuerraum 6 zwei Federn 5, 9 aufgenommen. Der Steuerraum 6 ist durch eine Zwischenwand 15 mit einer zentralen Durchströmöffnung 16 in zwei Federräume unterteilt, so dass sich beide Federn 5, 9 an der Zwischenwand 15 abstützen können. Die weitere Feder 9 kann kleiner als die Feder 5 ausgelegt werden, da sie lediglich das Steuerventil 7 schließen muss. Entsprechend verringert sich die zum Öffnen des Steuerventils 7 erforderliche Magnetkraft, so dass eine kleinere Magnetspule 11 zum Einsatz gelangen kann. Die Funktionsweise des Absperrventils 1 der Figuren 3a)-e) entspricht im Übrigen der des Absperrventils 1 der Figuren 1a)-e), so dass zur Vermeidung von Wiederholungen auf die entsprechende Beschreibung verwiesen wird.

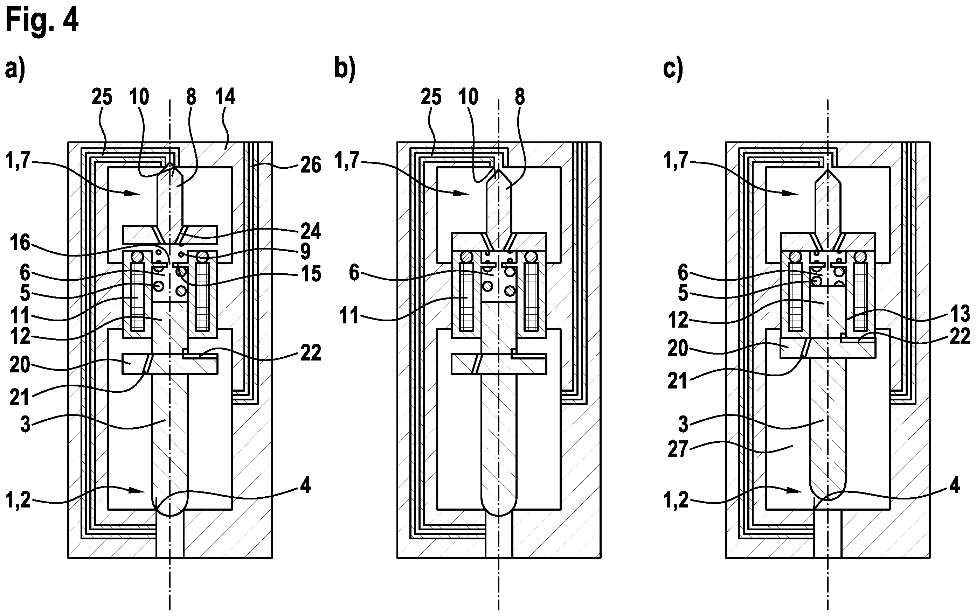

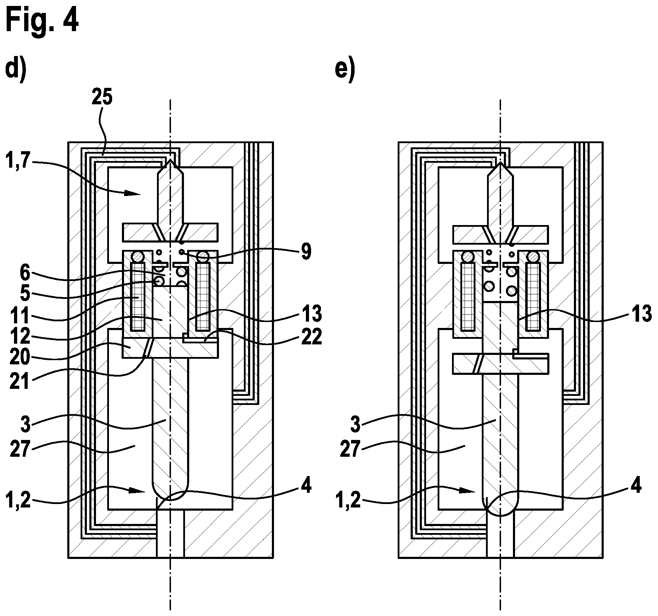

Das in den Figuren 4a)-e) dargestellte erfindungsgemäße Absperrventil 1 stellt eine Weiterbildung des Absperrventils 1 der Figuren 2a)-e) dar. Anstelle einer gemeinsamen Feder 5 sind auch hier im Steuerraum 6 zwei Federn 5, 9 aufgenommen. Der Steuerraum 6 ist durch eine Zwischenwand 15 mit einer zentralen Durchströmöffnung 16 in zwei Federräume unterteilt, so dass sich beide Federn 5, 9 an der Zwischenwand 15 abstützen können. Die weitere Feder 9 kann kleiner als die Feder 5 ausgelegt werden, da sie lediglich das Steuerventil 7 schließen muss. Entsprechend verringert sich die zum Öffnen des Steuerventils 7 erforderliche Magnetkraft, so dass eine kleinere Magnetspule 11 zum Einsatz gelangen kann. Da die Funktionsweise des Absperrventils 1 der Figuren 4a)-e) im Übrigen der des Absperrventils 1 der Figuren 2a)-e) entspricht, wird zur Vermeidung von Wiederholungen auf die entsprechende Beschreibung verwiesen.

## Patentansprüche

1. Absperrventil (1) für Wasserstofftanksysteme, umfassend ein Hauptventil (2) mit einem hubbeweglichen Hauptventilkolben (3), der einenends einen Steuerraum (6) begrenzt, andernends mit einem Hauptventilsitz (4) zusammenwirkt und in Richtung des Hauptventilsitzes (4) von der Federkraft einer Feder (5) beaufschlagt ist, sowieeine ringförmige Magnetspule (11) zur Einwirkung auf einen als Tauchanker ausgeführten Endabschnitt (12) des Hauptventilkolbens (3), **dadurch gekennzeichnet, dass** das Absperrventil (1) ein Steuerventil (7) umfasst, zur Steuerung der Hubbewegungen des Hauptventilkolbens (3), wobei das Steuerventil (7) einen Steuerventilanker (8) aufweist, der in einem axialen Abstand koaxial zum Hauptventilkolben (3) angeordnet ist und von der Federkraft der Feder (5) oder einer weiteren Feder (9) in Richtung eines Steuerventilsitzes (10) beaufschlagt ist, wobei die Magnetspule (11) das Steuerventil betätigt.

2. Absperrventil (1) nach Anspruch 1,
**dadurch gekennzeichnet, dass** die Bewegungen von Hauptventilkolben (3) und Steuerventilanker (8) gegenläufig sind.

3. Absperrventil (1) nach Anspruch 1 oder 2,
**dadurch gekennzeichnet, dass** der Steuerraum (6) über eine Zulaufdrossel (13) mit einem Gas, vorzugsweise mit Wasserstoff, aus einem Speichervolumen beaufschlagbar und bei geöffnetem Steuerventil (7) über den Steuerventilsitz (10) entlastbar ist.

4. Absperrventil (1) nach Anspruch 3,
**dadurch gekennzeichnet, dass** der als Tauchanker ausgeführte Endabschnitt (12) des Hauptventilkolbens (3) mindestens eine Längsnut und/oder Abflachung zur Ausbildung der Zulaufdrossel (13) aufweist.

5. Absperrventil (1) nach einem der vorhergehenden Ansprüche,
**dadurch gekennzeichnet, dass** der Steuerventilanker (8) als Flachanker ausgeführt ist, der vorzugsweise in radialer Richtung umlaufend einen Abstand (a) zu einem Gehäuse (14) einhält.

6. Absperrventil (1) nach einem der vorhergehenden Ansprüche,
**dadurch gekennzeichnet, dass** die mindestens eine Feder (5, 9) im Steuerraum (6) aufgenommen ist, der vorzugsweise durch eine Zwischenwand (15) mit Durchströmöffnung (16) unterteilt ist.

7. Absperrventil (1) nach einem der vorhergehenden Ansprüche,
**dadurch gekennzeichnet, dass** der Hauptventilkolben (3) einen Ringbund (17) mit einer Anschlagfläche (18) aufweist oder ausbildet, in der vorzugsweise mindestens ein radial verlaufender Strömungskanal (19) ausgebildet ist.

8. Absperrventil (1) nach einem der vorhergehenden Ansprüche,
**dadurch gekennzeichnet, dass** der Hauptventilkolben (3) einen als Flachanker ausgeführten Abschnitt (20) aufweist, in dem mindestens eine Durchströmöffnung (21) und/oder ein radial verlaufender Strömungskanal (22) ausgebildet ist bzw. sind.

9. Absperrventil (1) nach Anspruch 8,
**dadurch gekennzeichnet, dass** die Magnetspule (11) in einem Bereich (23), der mit dem als Flachanker ausgebildeten Abschnitt (20) des Hauptventilkolbens (3) zusammenwirkt, einen erhöhten magnetischen Widerstand aufweist.

10. Absperrventil (1) nach einem der vorhergehenden Ansprüche,
**dadurch gekennzeichnet, dass** der Steuerventilanker (8) mindestens eine Durchströmöffnung (24) zur Entlastung des Steuerraums (6) aufweist.

11. Wasserstofftanksystem, umfassend mindestens einen Druckgasbehälter und ein Absperrventil (1) nach einem der vorhergehenden Ansprüche zum Absperren des Druckgasbehälters.

## Claims

1. Shut-off valve (1) for hydrogen tank systems, comprising a main valve (2) with a main valve piston (3) which is able to perform stroke movements, delimits a control chamber (6) at one end, interacts with a main valve seat (4) at the other end and is subjected to the spring force of a spring (5) in the direction of the main valve seat (4), and comprising an annular magnet coil (11) for acting on an end portion (12), in the form of a plunger-type armature, of the main valve piston (3), **characterized in that** the shut-off valve (1) comprises a control valve (7) for controlling the stroke movements of the main valve piston (3), wherein the control valve (7) has a control valve armature (8) which is arranged coaxially with and at an axial distance from the main valve piston (3) and which is subjected to the spring force of the spring (5) or of a further spring (9) in the direction of a control valve seat (10), wherein the magnet coil (11) actuates the control valve.

2. Shut-off valve (1) according to Claim 1,
**characterized in that** the movements of the main valve piston (3) and the control valve armature (8) are in opposite directions.

3. Shut-off valve (1) according to Claim 1 or 2,
**characterized in that** the control chamber (6) is able to be charged with a gas, preferably with hydrogen, from a storage volume via an inflow throttle (13) and, with the control valve (7) open, is able to be relieved of pressure via the control valve seat (10).

4. Shut-off valve (1) according to Claim 3,
**characterized in that** the end portion (12) of the main valve piston (3) in the form of a plunger-type armature has at least one longitudinal groove and/or flattening for forming the inflow throttle (13).

5. Shut-off valve (1) according to one of the preceding claims,
**characterized in that** the control valve armature (8) is in the form of a flat armature, which preferably maintains a distance (a) from a housing (14) circumferentially in a radial direction.

6. Shut-off valve (1) according to one of the preceding claims,
**characterized in that** the at least one spring (5, 9) is accommodated in the control chamber (6), which is preferably subdivided by an intermediate wall (15) with a throughflow opening (16).

7. Shut-off valve (1) according to one of the preceding claims,
**characterized in that** the main valve piston (3) has or forms a ring-like collar (17) with a stop surface (18), in which there is preferably formed at least one radially extending flow channel (19).

8. Shut-off valve (1) according to one of the preceding claims,
**characterized in that** the main valve piston (3) has a portion (20) in the form of a flat armature, in which at least one throughflow opening (21) and/or one radially extending flow channel (22) are/is formed.

9. Shut-off valve (1) according to Claim 8,
**characterized in that** the magnet coil (11) has an increased magnetic resistance in a region (23) which interacts with that portion (20) of the main valve piston (3) which is in the form of a flat armature.

10. Shut-off valve (1) according to one of the preceding claims,
**characterized in that** the control valve armature (8) has at least one throughflow opening (24) for relieving the control chamber (6) of pressure.

11. Hydrogen tank system comprising at least one compressed gas container and one shut-off valve (1) according to one of the preceding claims for shutting off the compressed gas container.

## Revendications

1. Soupape d'arrêt (1) pour des systèmes de réservoir d'hydrogène, comprenant une soupape principale (2) avec un piston (3) de soupape principale mobile en va-et-vient, qui délimite, sur une extrémité, un espace de commande (6) et coopère, sur l'autre extrémité, avec un siège (4) de soupape principale et est soumis à l'action de la force de ressort d'un ressort (5) en direction du siège (4) de soupape principale, ainsi qu'une bobine magnétique (11) annulaire destinée à agir sur une section d'extrémité (12) du piston (3) de soupape principale réalisée sous la forme d'un noyau plongeur, **caractérisée en ce que** la soupape d'arrêt (1) comprend une soupape de commande (7) destinée à commander les mouvements de va-et-vient du piston (3) de soupape principale, la soupape de commande (7) comportant un noyau (8) de soupape de commande, qui est disposé coaxialement au piston (3) de soupape principale à une distance axiale et est soumis à l'action de la force de ressort du ressort (5) ou d'un autre ressort (9) en direction d'un siège (10) de soupape de commande, la bobine magnétique (11) actionnant la soupape de commande.

2. Soupape d'arrêt (1) selon la revendication 1,
**caractérisée en ce que** les mouvements du piston (3) de soupape principale et du noyau (8) de soupape de commande sont inverses.

3. Soupape d'arrêt (1) selon la revendication 1 ou 2,
**caractérisée en ce que** l'espace de commande (6) peut être soumis à l'action d'un gaz, de préférence d'hydrogène, provenant d'un volume de stockage par un étranglement d'arrivée (13) et peut être déchargé par le siège (10) de soupape de commande lorsque la soupape de commande (7) est ouverte.

4. Soupape d'arrêt (1) selon la revendication 3,
**caractérisée en ce que** la section d'extrémité (12) du piston (3) de soupape principale réalisée sous la forme d'un noyau plongeur comporte au moins une rainure longitudinale et/ou une zone aplatie pour former l'étranglement d'arrivée (13).

5. Soupape d'arrêt (1) selon l'une des revendications précédentes,
**caractérisée en ce que** le noyau (8) de soupape de commande est réalisé sous la forme d'un noyau plat, qui respecte une distance (a) par rapport à un boîtier (14) en périphérie de préférence dans une direction radiale.

6. Soupape d'arrêt (1) selon l'une des revendications précédentes,
**caractérisée en ce que** l'au moins un ressort (5, 9) est logé dans l'espace de commande (6), qui est divisé de préférence par une paroi intermédiaire (15) avec une ouverture pour flux traversant (16).

7. Soupape d'arrêt (1) selon l'une des revendications précédentes,
**caractérisée en ce que** le piston (3) de soupape principale comporte ou forme un collet annulaire (17) avec une surface de butée (18), dans laquelle de préférence au moins un canal d'écoulement (19) s'étendant radialement est formé.

8. Soupape d'arrêt (1) selon l'une des revendications précédentes,
**caractérisée en ce que** le piston (3) de soupape principale comporte une section (20) réalisée sous la forme d'un noyau plat, dans laquelle au moins une ouverture pour flux traversant (21) et/ou un canal d'écoulement (22) s'étendant radialement est formé(e) ou sont formés.

9. Soupape d'arrêt (1) selon la revendication 8,
**caractérisée en ce que** la bobine magnétique (11) présente une résistance magnétique élevée dans une zone (23), qui coopère avec la section (20) du piston (3) de soupape principale formée comme un noyau plat.

10. Soupape d'arrêt (1) selon l'une des revendications précédentes,
**caractérisée en ce que** le noyau (8) de soupape de commande comporte au moins une ouverture pour flux traversant (24) destinée à décharger l'espace de commande (6).

11. Système de réservoir d'hydrogène, comprenant au moins un récipient de gaz sous pression et une soupape d'arrêt (1) selon l'une des revendications précédentes pour fermer le récipient de gaz sous pression.
